# EUROPÄISCHE PATENTSCHRIFT

(11) **EP 0 336 283 B1**
(45) Veröffentlichungstag und Bekanntmachung des Hinweises auf die Patenterteilung: **10.02.1993**
(21) Anmeldenummer: 89105574.1
(22) Anmeldetag: 30.03.1989
(51) Int. Cl.: C09D 5/44, C09D 5/08, C25D 13/10

(54) **Kathodisch abscheidbare Elektrotauchlacke**
Cathodically depositable electrodeposition paint
Peintures d'électrophorèse déposables à la cathode

(30) Priorität: 07.04.1988 AT 891/88
(43) Veröffentlichungstag der Anmeldung: 11.10.1989
(73) Patentinhaber: VIANOVA KUNSTHARZ AKTIENGESELLSCHAFT, A-8011 Graz (AT)
(72) Erfinder: Paar, Willibald, Dr., A-8010 Graz (AT); Schipfer, Rudolf, Dr., A-8010 Graz (AT)

(56) Entgegenhaltungen:
- DE-A- 2 752 198
- US-A- 4 329 381

## Beschreibung

Die Erfindung betrifft kathodisch abscheidbare Elektrotauchlacke mit hervorragender Korrosionsschutzwirkung auf nicht vorbehandeltem Stahlblech.

Kathodisch abscheidbare Lacke weisen in der Regel auf zinkphosphatierten Substraten einen sehr guten Korrosionsschutz auf. Eine auf nicht vorbehandelten Stahlblechen (=Blankblechen) ausreichende Korrosionsbeständigkeit ist nur durch Zugabe von Bleiverbindungen in geeigneter Form zu erhalten.

Alle derzeit für diesen Zweck eingesetzten Bleiverbindungen haben jedoch in kathodisch abscheidbaren Elektrotauchlacken wesentliche Nachteile. Die als feste Stoffe eingesetzten Bleiverbindungen (Bleioxid bzw. basisches Bleisilikat) werden erst im Lack gelöst. Die Lacke bedürfen daher längerer Homogenisierungszeiten, bis die entsprechende Wirksamkeit des Bleisalzes als Katalysator gegeben ist. Die dabei gebildeten wasserlöslichen Salze befinden sich - ebenso wie andere dem Lack unmittelbar zugesetzte wasserlösliche Salze - zu einem wesentlichen Teil nicht in der Harzmicelle, sondern in der wäßrigen Phase des Lackes. Sie werden bei der elektrischen Abscheidung durch den im Film auftretenden Endosmoseeffekt, welcher eine Entwässerung des Filmes bewirkt, aus dem Film ausgewaschen oder auf dem Substrat als metallischer Niederschlag abgeschieden. Gelöste Salze werden überdies anteilig durch die bei Elektrotauchlackieranlagen eingesetzten Dialysevorrichtungen aus dem Bad entfernt und gegebenenfalls bei den Spülvorgängen in unkontrollierter Weise wieder ins Bad rückgeführt.

Die nichtwasserlöslichen Salze längerkettiger Fettsäuren sind im Harz löslich und verbleiben daher weitgehend in der Harzmicelle. Durch Hydrolyse entstehen jedoch titrierbare Mengen an wasserunlöslichen Fettsäuren, durch welche das Abscheidungsverhalten und die Badführung bei der Elektrotauchlackierung erheblich gestört werden.

Für die kathodische Elektrotauchlackierung geeignete Bleikatalysatoren sind in der T-PS-388 740 beschrieben, wobei die bisherigen Nachteile durch die Verwendung von Umsetzungsprodukten aus Blei(II)oxid und β-Hydroxyalkylaminogruppen aufweisenden Verbindungen überwunden werden.

Die Verwendung von Bleiverbindungen in Lacken wird jedoch in zunehmendem Maße von der Industrie aufgrund der Toxizität dieser Verbindungen und der damit verbundenen Entsorgungsprobleme abgelehnt. Andererseits stellt jedoch der ausreichende Blankblechkorrosionsschutz eine unabdingliche Forderung der Verbraucher kathodisch abscheidbarer Elektrotauchlacke, insbesonders in der Automobilindustrie, dar.

Es wurde nun gefunden, daß bleifreie kationische Lacke, die Filme mit einem ausgezeichneten Blankblechkorrosionsschutz ergeben, formuliert werden können, wenn die Bindemittel mit basischen Verbindungen einer Reihe von Metallen, die durch Umsetzung der entsprechenden Metalloxide und/oder Metallacetylacetonate und/oder Metallalkoholate mit β-Hydroxyalkylaminogruppen aufweisenden Verbindungen erhalten werden, kombiniert werden.

Die Erfindung betrifft demgemäß wasserverdünnbare kathodisch abscheidbare Elektrotauchlacke, welche dadurch gekennzeichnet sind, daß sie als Bindemittel in partiell oder vollständig neutralisierter Form
(A) 70 - 99,5 Gew.-%, vorzugsweise 80 - 95 Gew.-%, eines kationischen filmbildenden Harzes sowie eines gegebenenfalls anteilig vorhandenen Zusatzharzes, und
(B) 0,5 - 30 Gew.-%, vorzugsweise 5 - 20 Gew.-%, einer basischen Metallverbindung der allgemeinen Formel 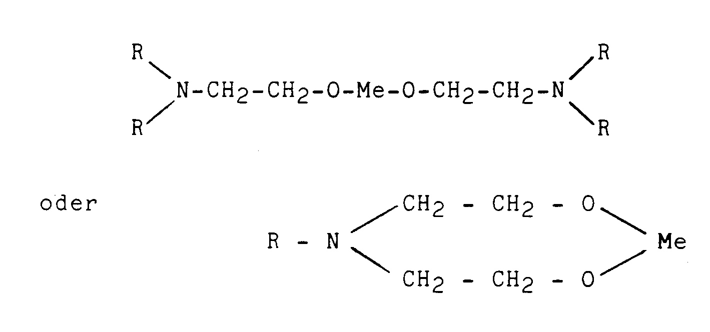 enthalten, wobei bei Komponente (B) R ein Wasserstoffatom, einen gegebenenfalls substituierten aliphatischen oder cycloaliphatischen Alkyl- oder Alkanolrest, oder den Rest einer höhermolekularen Verbindung, vorzugsweise den nach Reaktion mit einer sekundären Aminogruppe verbleibenden Rest einer Oxiranverbindung, darstellt und Me die Metalle Mg, Al, Ca, Ti, V, Cr, Mn, Fe, Co, Ni, Cu, Zn, Zr, Sn oder eine Gruppe Me(OR₁)ₙ₋₂ bezeichnet, wobei R₁ einen Alkylrest mit 1 - 10 C-Atomen und n die Wertigkeit des Metalls bedeuten, mit der Maßgabe, daß der Metallgehalt der Kombination, bezogen auf Bindemittelfestkörpergehalt, 0,03 bis 3,0, vorzugsweise 0,1 bis 1,0 Gew.-%, beträgt.

Die als Komponente (A) eingesetzten kationischen filmbildenden Harze sind in großer Anzahl aus der Fachliteratur bekannt. Es handelt sich dabei um basische Gruppen aufweisende Polykondensationsharze, Polymerisationsharze oder Polyadditionsharze. Die bevorzugten Harze basieren auf Polyepoxidharzen, die als deren Umsetzungsprodukte mit Aminoalkylierungsprodukten von Phenolen oder als Epoxidharz-Amin-Addukte in der Praxis verwendet werden.

Die erfindungsgemäß als Komponente (B) eingesetzten basischen Metallverbindungen weisen die im Hauptanspruch angegebene allgemeine Formel auf. Die Verbindungen werden durch Umsetzung von Verbindungen, die mindestens eine β-Hydroxyalkylaminogruppe aufweisen, mit einem Oxid und/oder einem Acetylacetonat und/oder einem Alkoholat der angeführten Metalle erhalten.

Als β-hydroxyalkylaminofunktionelle Verbindungen können primäre, sekundäre oder tertiäre β-Hydroxyalkylamine wie Mono-, Di- oder Triethanolamin, die entsprechenden Isopropanolamine, (Cyclo)-Alkylalkanolamine, N-Phenylalkanolamine, N-Amino-alkyl-N-alkanolamine oder 2-Aminoalkanole oder -alkandiole sowie heterocyclische Verbindungen, wie das N-Hydroxyethylpiperazin etc. eingesetzt werden.

Bevorzugt werden Verbindungen verwendet, in welchen R einen höhermolekularen Rest darstellt. Beispiele für solche Verbindungen sind Umsetzungsprodukte von Glycidylgruppen tragenden Verbindungen mit sekundären Monoalkanolaminen bzw. vorzugsweise sekundären Dialkanolaminen. Der Rest R kann in diesem Fall von Mono- oder Diepoxidverbindungen, wie sie in den handelsüblichen Epoxidharzen mit einem Epoxidäquivalentgewicht bis zu ca. 1000 vorliegen, stammen. Ebenso kann R auch der Rest eines niedermolekularen Glycidylgruppen aufweisenden (Co)-Polymerisates sein.

Besonders bevorzugt werden für das erfindungsgemäße Verfahren Umsetzungsprodukte von Bisphenol-A-Epoxidharzen und Diethanolamin.

Die Hydroxylgruppen dieser β-Hydroxyalkylaminoverbindungen können vollständig oder anteilig mit der Metallverbindung umgesetzt werden.

Als Metallverbindung werden, neben den Oxiden der oben genannten Metalle, vorzugsweise deren Acetylacetonate, wie sie im Handel erhältlich sind, verwendet.

Die Herstellung der erfindungsgemäß eingesetzten basischen Metallkomplexe erfolgt durch Umsetzung der β-hydroxyalkylaminofunktionellen Verbindung mit dem Metalloxid oder dem Acetylacetonat bei 20 bis 110°C. Die Reaktion kann entweder in Substanz oder in Gegenwart von Lösemitteln, wie Glykolether oder Ketonen, erfolgen. Vor allem bei höhermolekularen Reaktionspartnern ist die Verwendung von Lösemitteln in vielen Fällen notwendig und vorteilhaft. Das gegebenenfalls gebildete Reaktionswasser kann durch azeotrope Destillation mit einem Schleppmittel, z. B. einem Benzinkohlenwasserstoff, Siedebereich 80 - 120°C, aus dem Reaktionsgut entfernt werden.

Eine weitere Möglichkeit der Herstellung ist die Reaktion von Metallalkoholaten mit den β-hydroxyalkylaminofunktionellen Verbindungen unter Abspaltung von Alkohol aus dem Metallalkoholat.

Die gegebenenfalls in kristalliner Form anfallenden Verbindungen sind nach teilweiser oder vollständiger Neutralisation ihrer basischen Gruppen mit Wasser verdünnbar.

Die erfindungsgemäß eingesetzten basischen Metallverbindungen sind auch in der Kälte mit den verschiedenen kationischen Materialien auf der Basis von Kondensations-, Polymerisations- und Polyadditionsharzen einwandfrei verträglich. Durch ihre organophilen Molekülsegmente verbleiben sie im verdünnten wäßrigen Lackmaterial in der Harzphase und damit auch in einem durch die Endosmose bei der Elektrotauchlackierung weitgehend entwässerten Film. Die Produkte unterliegen bei längerer Lagerung bzw. in der Elektrotauchlackieranlage keiner hydrolytischen Spaltung. Die gegebenenfalls beim Einbrennen auftretenden Spaltprodukte sind flüchtig und ökologisch harmlos.

Die erfindungsgemäß verwendeten basischen Metallverbindungen können dem Basisharz zu jedem Zeitpunkt der Herstellung des Lackes zugesetzt werden. Die Zugabe kann in konzentrierter Form zum Bindemittel, zu einem eventuell eingesetzten Pigmentanreibeharz, oder zur Pigmentpaste erfolgen, wobei gegebenenfalls die Protonierung zusammen mit dem Bindemittel erfolgt. Die Verbindungen können aber auch in neutralisierter und mit Wasser und/oder Hilfslösemitteln verdünnter Form dem verdünnten Lackmaterial zugesetzt werden. Bei der Elektrotauchlackierung kann gegebenenfalls die verdünnte wäßrige Lösung der basischen Metallverbindung auch während des Betriebes dem Badmaterial zugesetzt werden.

Die erfindungsgemäß eingesetzten basischen Metallverbindungen werden in einer Menge verwendet, daß der Lack, bezogen auf den Bindemittelfestkörper 0,03 bis 3,0 %, vorzugsweise 0,1 bis 1,0 %, Metallgehalt enthält.

Die folgenden Beispiele erläutern die Erfindung, ohne sie in ihrem Umfang zu beschränken. Alle Angaben in Teilen oder Prozenten beziehen sich, sofern nichts anderes angegeben ist, auf Gewichtseinheiten.

### Herstellung der Komponente A

### Komponente A 1

228 Tle Bisphenol A (1 Mol) werden mit 260 Tlen Diethylaminopropylamin (2 Mol) und 66 Tlen Paraformaldehyd, 91 % (2 Mol) in Gegenwart von 131 Tlen Toluol als Azeotropschleppmittel bis zur Abtrennung von 42 Tlen Reaktionswasser umgesetzt. Nach Kühlen auf 30°C werden innerhalb 45 Minuten 608 Tle (2,0 Mol) eines mit 2-Ethylhexanol halbblockierten Toluylendiisocyanats zugegeben. Sobald ein NCO-Wert von praktisch 0 erreicht ist, wird das Produkt in 152 Tlen Diethylenglykoldimethylether gelöst.

1400 Tle dieser Lösung werden mit einer Lösung von 190 Tlen eines Epoxidharzes auf Basis von Bisphenol A (Epoxidäquivalentgewicht ca. 190) und 250 Tlen (1 Mol) eines Glycidylesters einer gesättigten, tertiären C₉-C₁₁-Monocarbonsäure in 389 Tlen Diethylenglykoldimethylether versetzt und bei 95 bis 100°C bis zu einem Epoxidwert von 0 umgesetzt. Das Produkt ist nach Zusatz von 40 Millimol Ameisensäure pro 100 g Festharz einwandfrei mit Wasser verdünnbar.

### Komponente A 2

500 Tle eines Epoxidharzes auf Basis von Bisphenol A (Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowei 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt und mit 97 Tlen 3 n-Ameisensäure partiell neutralisiert.

70 Tle Festharz dieses Bindemittels werden anschließend mit 30 Tlen Festharz der nachfolgend beschriebenen Härtungskomponente bei 60°C 1 Stunde homogenisiert.

Herstellung der Vernetzungskomponente: 396 Tle Malonsäuredimethylester und 134 Tle Trimethylolpropan werden in Gegenwart von 1,1 Tlen Zinkoctoat (8 % Metallgehalt) bei 130°C ca. 10 Stunden lang umgesetzt, wobei etwa 90 Tle Methanol als Destillat entweichen. Der fertige polyfunktionelle Ester ist eine farblose Flüssigkeit mit einer Hydroxylzahl von 16 mg KOH/g.

### Komponente A 3

In einem mit Rührer, Thermometer und Rückflußkühler ausgestatteten Reaktionsgefäß werden 1000 Tle eines Epoxidharzes auf Bisphenol A-Basis (Epoxidäquivalent ca. 500) in 492 Tlen Ethylglykolacetat bei 60 bis 70°C gelöst, 0,2 Tle Hydrochinon und 144 Tle Acrylsäure zugegeben und die Temperatur auf 100 bis 110°C gesteigert. Die Reaktion wird bei dieser Temperatur bis zu einer Säurezahl von unter 5 mg KOH/g geführt (DBZ = 1,75). Anschließend wird das Reaktionsprodukt bei 60 bis 70°C mit 652 Tlen BMI (70 %)*) versetzt und bis zu einem NCO-Wert von praktisch Null reagiert (DBZ = 1,25, BNZ = 1,1).
- DBZ:: Doppelbindungszahl: entspricht der Anzahl der endständigen ethylenischen Doppelbindungen pro 1000 Molekulargewichtseinheiten
- BNZ:: Basenzahl: entspricht der Anzahl der basischen N-Gruppierungen pro 1000 Molekulargewichtseinheiten.

*) Basisches Monoisocyanat aus 1 Mol Toluylendiisocyanat und 1 Mol Diethanolamin (70%ig in Methylisobutylketon)

### Komponente A 4

700 Tle B 180 **) werden in bekannter Weise in Gegenwart von 0,5 Tlen Diphenylparaphenylendiamin (Inhibitor) bei 200°C mit 100 Tlen Maleinsäureanhydrid so lange reagiert, bis dieses vollständig gebunden ist. Nach Kühlen auf 100°C werden 130 Tle 2-Ethylhexanol zugesetzt und bei 120°C bis zum Erreichen der theoretischen Säurezahl des Halbesters verestert (MAD A).
**) B 180 ist ein flüssiges Polybutadienöl (ca. 75 % 1,4 cis, ca. 24 % 1,4-trans- und ca. 1 % Vinyldoppelbindungen; Molekulargewicht ca. 1500 ± 15 %, Jodzahl ca. 450 g/100 g).

110 Tle MAD A (entsprechend ca. 0,12 COOH-Gruppen) werden mit 212 Tlen eines Bisphenol A-Diepoxidharzes (Epoxidäquivalent ca. 190) in 80%iger Lösung in Diethylenglykoldimethylether bei 120°C bis zu einer Säurezahl von praktisch Null umgesetzt. Nach Zusatz von 108 Tlen Diethylenglykoldimethylether, 59 Tlen Diethylaminopropylamin (0,45 Mol) und 59 Tlen 2-Ethylhexylamin (0,45 Mol) wird der Ansatz bei 65 bis 70°C bis zu einem Epoxidwert von praktisch Null reagiert. Nach Erreichen dieses Wertes werden 114 Tle Bisphenol A (0,5 Mol) und 50 Tle Paraformaldehyd, 91 % (1,5 Mol) zugegeben und die Reaktion bei 60°C bis zum Erreichen eines Gehaltes an freiem Formaldehyd von 0,5 bis 1 geführt.

### Herstellung der Komponente (B)

Als β-Hydroxyalkylaminverbindungen für die Herstellung der Komponenten (B) werden folgende Verbindungen verwendet:
- HAM 1: Umsetzungsprodukt eines Bisphenol A-Diglycidylethers mit Diethanolamin (MG = 590)
- HAM 2: Umsetzungsprodukt eines Mols Isophorondiisocyanat mit 2 Mol Triethanolamin (MG ca. 520)
- HAM 3: Umsetzungsprodukt eines Diepoxidharzes auf Basis Bisphenol A (Epoxidäquivalent ca. 500) mit Diethanolamin (MG ca. 1400)
- HAM 4: Umsetzungsprodukt von 1 Mol Hydroxyethylpiperazin mit 1 Mol Dodecenoxid (MG = 314)

Die β-Hydroxyalkylaminverbindungen werden wie nachfolgend beschrieben mit dem Metallacetylacetonat (Verfahren I), mit dem Metallalkoholat (Verfahren II) oder mit dem Metalloxid (Verfahren III) zu den erfindungsgemäß eingesetzten basischen Metallkomplexen umgesetzt.

### Verfahren I

Das β-Hydroxyalkylamin wird vorgelegt und bei 30 - 50°C unter Kühlung das Metallacetylacetonat portionsweise zugegeben. Die Vervollständigung der Reaktion erfolgt bei 60 - 70°C innerhalb von ca. 6 - 8 Stunden unter Abspaltung des Acetylacetons, welches als Lösemittel im Ansatz verbleibt.

### Verfahren II

Wie bei Verfahren 1 wird das β-Hydroxyalkylamin vorgelegt und bei 30 - 90°C unter fallweiser Kühlung das Metallalkoholat portionsweise zugegeben. Die Vervollständigung der Reaktion erfolgt bei 80 - 90°C unter Entfernung des entstehenden Alkohols im Vakuum.

### Verfahren III

β-Hydroxyalkylamin und Metalloxid werden auf 100 - 120°C erwärmt. Anschließend erfolgt die azeotrope Entfernung des Reaktionswassers mit einem geeigneten Kreislaufmittel (Toluol, Spezialbenzin mit geeignetem Siedebereich).

Die entstandenen basischen Metallkomplexe (B) werden in dem in Tabelle 1 angegebenen Lösungsmittel gelöst und durch Zugabe der angegebenen Säuremenge (mMol pro 100 g Festharz) in einen 20%igen wäßrigen Klarlack überführt.

Gemäß Tabelle 1 wurden folgend Metallverbindungen (MV) eingesetzt.
- MV 1:: Ti (O Butyl)₂ (acetylacetonat)₂
- MV 2:: Zinkoxid
- MV 3:: Eisenacetylacetonat
- MV 4:: Cobaltacetylacetonat
- MV 5:: Ti(O Butyl)₄
- MV 6:: Calciumoxid
Als Lösemittel wird Methoxypropanol (MP), Acetylaceton (ACAC) bzw. Ethylenglykolmonoethylether (EGL) verwendet.
Als Säure wird Ameisensäure (AS) bzw. Essigsäure (ES) verwendet.

Der Metallgehalt ist in Gew.-%, bezogen auf Festharz, angegeben.

**Tabelle 1**

| | TLE β-HYDROXYALKYLAMIN | TLE METALLVERBINDUNG | Feststoff (%) Lösemittel | Säure | Metallgehalt |
|---|---|---|---|---|---|
| B 1 | 590 HAM 1 | 346 MV 1 | 80, MP | 80, AS | 6,5 |
| B 2 | 1160 HAM 3 | 81 MV 2 | 60, MP | 120, ES | 5,3 |
| B 3 | 520 HAM 2 | 356 MV 3 | 70, EGL | 100, AS | 8,3 |
| B 4 | 590 HAM 1 | 259 MV 4 | 80, ACAC | 60, AS | 9,1 |
| B 5 | 1160 HAM 3 | 340 MV 5 | 60, EGL | 120, AS | 3,6 |
| B 6 | 590 HAM 1 | 56 MV 6 | 60, MP | 120, ES | 6,3 |
| B 7 | 314 HAM 4 | 81 MV 2 | 90, MP | 180, AS | 17,2 |

### Herstellung der pigmentierten Basisharzlacke

Aus den Komponenten A 1 bis A 4 werden unter Verwendung einer Pigmentmischung aus 1 Tl Farbruß und 99 Tlen Titandioxid die in der Tabelle 2 angegebenen Lacke hergestellt. Die Einstellung des Lackfestkörpers erfolgt mit deionisiertem Wasser.

**Tabelle 2**

| Lack Nr. | Neutralisation (1) | Pigment-Bindemittelverhältnis | Lackfestkörper (%) |
|---|---|---|---|
| LA 1 | 40 | 0,6 : 1 | 20 |
| LA 2 | 40 | 0,3 : 1 | 18 |
| LA 3 | 60 | 0,5 : 1 | 22 |
| LA 4 | 45 | 0,45 : 1 | 16 |

| | | | |
|---|---|---|---|
| (1) mMol Ameisensäure pro 100 g Festharz | | | |

### Erfindungemäße Lackkombinationen und Vergleichbeispiele

Gemäß den in der Tabelle 3 angegebenen Werten werden die pigmentierten Basisharzlacke (LA 1 bis LA 4) mit den Klarlacken aus den basischen Metallverbindungen kombiniert und gut homogenisiert. Die Abscheidung erfolgt auf ein als Kathode geschaltetes Stahlblech unter Bedingungen, unter welchen eine Trockenfilmstärke von 20 ± 2 µm erhalten wird. Die Härtung erfolgt durch Einbrennen im Umluftofen (25 Minuten/170°C).

Die in der Tabelle 3 angegebenen Prüfwerte für den Salzsprühtest (ASTM B 117-73) geben den Angriff am Kreuzschnitt in Millimeter nach 240 Stunden an. Als Vergleichsbeispiel wurden die Lacke LA 1 bis LA 4 ohne Komponente (B) abgeschieden und geprüft. Die entsprechenden Werte für den Salzsprühtest liegen bei einem Angriff zwischen 40 und 70 mm.

**Tabelle 3**

| (alle Werte beziehen sich auf Festharz) | | | | |
|---|---|---|---|---|
| Beispiel | Tle La | Tle B | Metallgehalt % Me | Salzsprühtest |
| 1 | 90 LA 1 | 10 B 1 | 0,65 | 0,5 |
| 2 | 85 LA 1 | 15 B 2 | 0,80 | 1,2 |
| 3 | 95 LA 2 | 5 B 3 | 0,42 | 0,8 |
| 4 | 80 LA 2 | 20 B 5 | 0,72 | 0,7 |
| 5 | 90 LA 2 | 10 B 6 | 0,63 | 1,0 |
| 6 | 70 LA 3 | 30 B 5 | 1,08 | 0,5 |
| 7 | 95 LA 3 | 5 B 3 | 0,42 | 1,2 |
| 8 | 92 LA 4 | 8 B 4 | 0,73 | 1,5 |
| 9 | 85 LA 4 | 15 B 1 | 0,98 | 0,3 |
| 10 | 90 LA 4 | 10 B 3 | 0,83 | 0,8 |
| 11 | 97 LA 3 | 3 B 7 | 0,52 | 2,0 |

## Patentansprüche (Patentansprüche für folgende(n) Vertragsstaat(en): DE, FR, GB, IT)

1. Wasserverdünnbare kathodisch abscheidbare Elektrotauchlacke, dadurch gekennzeichnet, daß sie als Bindemittel in partiell oder vollständig neutralisierter Form
(A) 70 - 99,5 Gew.-%, vorzugsweise 80 - 95 Gew.-%, eines kationischen filmbildenden Harzes sowie eines gegebenenfalls anteilig vorhandenen Zusatzharzes, und
(B) 0,5 - 30 Gew.-%, vorzugsweise 5 - 20 Gew.-%, einer basischen Metallverbindung der allgemeinen Formel 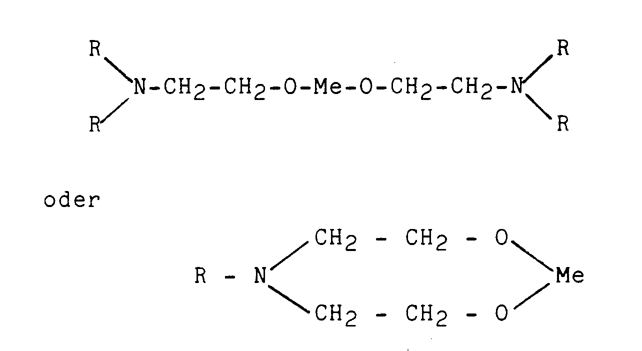 enthalten, wobei bei Komponente (B) R ein Wasserstoffatom, einen gegebenenfalls substituierten aliphatischen oder cycloaliphatischen Alkyl-oder Alkanolrest, oder den Rest einer höhermolekularen Verbindung, vorzugsweise den nach Reaktion mit einer sekundären Aminogruppe verbleibenden Rest einer Oxiranverbindung, darstellt und Me die Metalle Mg, Al, Ca, Ti, V, Cr, Mn, Fe, Co, Ni, Cu, Zn, Zr, Sn oder eine Gruppe Me(OR₁)ₙ₋₂ bezeichnet, wobei R₁ einen Alkylrest mit 1 - 10 C-Atomen und n die Wertigkeit des Metalls bedeuten, mit der Maßgabe, daß der Metallgehalt der Kombination, bezogen auf Bindemittelfestkörpergehalt, 0,03 bis 3,0, vorzugsweise 0,1 bis 1,0 Gew.-%, beträgt.

2. Wasserverdünnbare Lacke nach Anspruch 1, dadurch gekennzeichnet, daß als Komponente (B) Umsetzungsprodukte von Verbindungen, die mindestens eine β-Hydroxyalkylaminogruppe aufweisen, mit einem Oxid und/oder einem Acetylacetonat und/oder einem Alkoholat der im Anspruch 1 angeführten Metalle eingesetzt werden.

3. Wasserverdünnbare Lacke nach den Ansprüchen 1 und 2, dadurch gekennzeichnet, daß als Komponente (B) Umsetzungsprodukte von β-Hydroxyalkylaminen, welche gegebenenfalls N-haltige Substituenten tragen können, mit den Metallverbindungen eingesetzt werden.

4. Wasserverdünnbare Lacke nach den Ansprüchen 1 und 2, dadurch gekennzeichnet, daß als Komponente (B) Umsetzungsprodukte aus höhermolekularen β-Hydroxyalkylaminoverbindungen, vorzugsweise Reaktionsprodukte aus Glycidylgruppen tragenden Verbindungen und sekundären Mono- und/oder Dialkanolaminen, mit den Metallverbindungen eingesetzt werden.

5. Wasserverdünnbare Lacke nach Anspruch 4, dadurch gekennzeichnet, daß als Komponente (B) ein Umsetzungsprodukt aus einem Bisphenol A-Epoxidharz-Diethanolamin-Addukt mit den Metallverbindungen eingesetzt wird.

6. Wasserverdünnbare Lacke nach den Ansprüchen 1 bis 5, dadurch gekennzeichnet, daß die Zugabe der Komponente (B) in konzentrierter oder protonisierter und verdünnter Form zur Komponente (A) oder zu einem Pigmentanreibeharz oder zu einer Pigmentpaste, die einen Teil der Komponente (A) enthält, erfolgt.

## Patentansprüche (Patentansprüche für folgende(n) Vertragsstaat(en): ES)

1. Verfahren zur Herstellung von wasserverdünnbaren kathodisch abscheidbaren Elektrotauchlacken, dadurch gekennzeichnet, daß man als Bindemittel in partiell oder vollständig neutralisierter Form eine Mischung von
(A) 70 bis 99,5 Gew.-%, vorzugsweise 80 bis 95 Gew.-%, eines kationischen filmbildenden Harzes sowie eines gegebenenfalls anteilig vorhandenen Zusatzharzes, und
(B) 0,5 bis 30 Gew.-%, vorzugsweise 5 bis 20 Gew.-%, einer basischen Metallverbindung der allgemeinen Formel 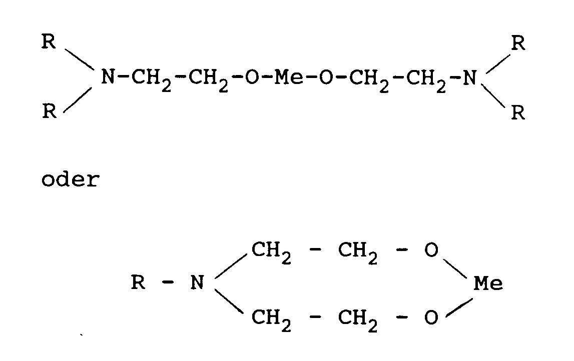 einsetzt, wobei bei Komponente (B) R ein Wasserstoffatom, einen gegebenenfalls substituierten aliphatischen oder cycloaliphatischen Alkyl- oder Alkanolrest, oder den Rest einer höhermolekularen Verbindung, vorzugsweise den nach Reaktion mit einer sekundären Aminogruppe verbleibenden Rest einer Oxiranverbindung, darstellt und Me die Metalle Mg, Al, Ca, Ti, V, Cr, Mn, Fe, Co, Ni, Cu, Zn, Zr, Sn oder eine Gruppe Me(OR₁)ₙ₋₂ bezeichnet, wobei R₁ einen Alkylrest mit 1 bis 10 C-Atomen und n die Wertigkeit des Metalls bedeuten, mit der Maßgabe, daß der Metallgehalt der Kombination, bezogen auf Bindemittelfestkörpergehalt, 0,03 bis 3,0, vorzugsweise 0,1 bis 1,0 Gew.-%, beträgt.

2. Verfahren nach Anspruch 1, dadurch gekennzeichnet, daß man eine Mischung einsetzt, welche als Komponente (B) Umsetzungsprodukte von Verbindungen, die mindestens eine β-Hydroxyalkylaminogruppe aufweisen, mit einem Oxid und/oder einem Acetylacetonat und/oder einem Alkoholat der im Anspruch 1 angeführten Metalle enthält.

3. Verfahren nach den Ansprüchen 1 und 2, dadurch gekennzeichnet, daß man eine Mischung einsetzt, welche als Komponente (B) Umsetzungsprodukte von β-Hydroxyalkylaminen, welche gegebenenfalls N-haltige Substituenten tragen können, mit den Metallverbindungen enthält.

4. Verfahren nach den Ansprüchen 1 und 2, dadurch gekennzeichnet, daß man eine Mischung einsetzt, welche als Komponente (B) Umsetzungsprodukte von höhermolekularen β-Hydroxyalkylaminoverbindungen, vorzugsweise Reaktionsprodukte aus Glycidylgruppen tragenden Verbindungen und sekundären Mono- und/oder Dialkanolaminen, mit den Metallverbindungen enthält.

5. Verfahren nach Anspruch 4, dadurch gekennzeichnet, daß man eine Mischung einsetzt, welche als Komponente (B) ein Umsetzungsprodukt aus einem Bisphenol A-Epoxidharz-Diethanolamin-Addukt mit den Metallverbindungen enthält.

6. Verfahren nach den Ansprüchen 1 bis 5, dadurch gekennzeichnet, daß die Zugabe der Komponente (B) in konzentrierter oder protonisierter und verdünnter Form zur Komponente (A) oder zu einem Pigmentanreibeharz oder zu einer Pigmentpaste, die einen Teil der Komponente (A) enthält, erfolgt.

## Claims (Claims for the following Contracting State(s): DE, FR, GB, IT)

1. Water-dilutable, cathodically depositable electrodip paints, characterised in that they contain as binder, in a partially or completely neutralised form,
(A) 70-99.5% by weight, preferably 80-95% by weight, of a cationic film-forming resin and of an additional resin optionally present as a proportion, and
(B) 0.5-30% by weight, preferably 5-20% by weight, of a basic metal compound of the general formula 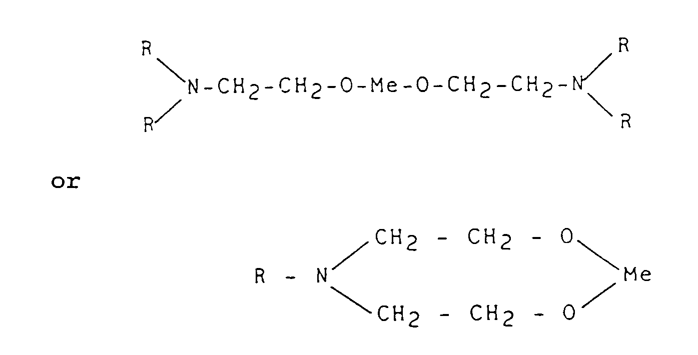 R in component (B) being a hydrogen atom, an optionally substituted aliphatic or cycloaliphatic alkyl or alkanol radical or the radical of a higher-molecular compound, preferably the radical of an oxirane compound remaining after reaction with a secondary amino group, and Me representing the metals Mg, Al, Ca, Ti, V, Cr, Mn, Fe, Co, Ni, Cu, Zn, Zr, Sn or a group Me(OR₁)ₙ₋₂, R₁ being an alkyl radical having 1-10 carbon atoms and n being the valency of the metal, with the proviso that the metal content of the combination, relative to the binder solids content, is 0.03 to 3.0 and preferably 0.1 to 1.0% by weight.

2. Water-dilutable paints according to Claim 1, characterised in that reaction products of compounds having at least one β-hydroxyalkylamino group with an oxide and/or an acetylacetonate and/or an alcoholate of the metals listed in Claim 1 are used as the component (B).

3. Water-dilutable paints according to Claims 1 and 2, characterised in that reaction products of β-hydroxyalkylamines, which can optionally have N-containing substituents, with the metal compounds are used as the component (B).

4. Water-dilutable paints according to Claims 1 and 2, characterised in that reaction products of higher-molecular β-hydroxyalkylamino compounds, preferably reaction products of compounds having glycidyl groups and secondary mono- and/or di-alkanolamines, with the metal compounds are used as the component (B).

5. Water-dilutable paints according to Claim 4, characterised in that a reaction product of a bisphenol A/epoxide resin/diethanolamine adduct with the metal compounds is used as the component (B).

6. Water-dilutable paints according to Claims 1 to 5, characterised in that the addition of the component (B) is made in a concentrated or protonated and diluted form to the component (A) or to a pigment-grinding resin or to a pigment paste which contains a part of the component (A).

## Claims (Claims for the following Contracting State(s): ES)

1. Process for the preparation of water-dilutable, cathodically depositable electrodip paints, characterised in that the binder used in a partially or completely neutralised form is a mixture of
(A) 70-99.5% by weight, preferably 80-95% by weight, of a cationic film-forming resin and of an additional resin optionally present as a proportion, and
(B) 0.5-30% by weight, preferably 5-20% by weight, of a basic metal compound of the general formula 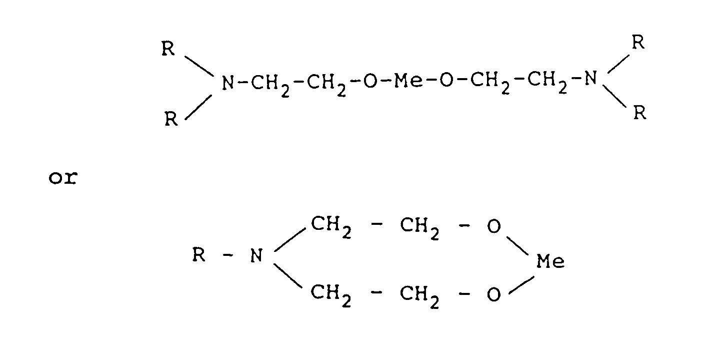 R in component (B) being a hydrogen atom, an optionally substituted aliphatic or cycloaliphatic alkyl or alkanol radical or the radical of a higher-molecular compound, preferably the radical of an oxirane compound remaining after reaction with a secondary amino group, and Me representing the metals Mg, Al, Ca, Ti, V, Cr, Mn, Fe, Co, Ni, Cu, Zn, Zr, Sn or a group Me(OR₁)ₙ₋₂, R₁ being an alkyl radical having 1-10 carbon atoms and n being the valency of the metal, with the proviso that the metal content of the combination, relative to the binder solids content, is 0.03 to 3.0 and preferably 0.1 to 1.0% by weight.

2. Process according to Claim 1, characterised in that a mixture is used which contains reaction products of compounds having at least one β-hydroxyalkylamino group with an oxide and/or an acetylacetonate and/or an alcoholate of the metals listed in Claim 1 as the component (B).

3. Process according to Claims 1 and 2, characterised in that a mixture is used which contains reaction products of β-hydroxyalkylamines, which can optionally have N-containing substituents, with the metal compounds as the component (B).

4. Process according to Claims 1 and 2, characterised in that a mixture is used which contains reaction products of β-hydroxyalkylamino compounds, preferably reaction products of compounds having glycidyl groups and secondary mono- and/or di-alkanolamines, with the metal compounds as the component (B).

5. Process according to Claim 4, characterised in that a mixture is used which contains a reaction product of a bisphenol A/epoxide resin/diethanolamine adduct with the metal compounds as the component (B).

6. Process according to Claims 1 to 5, characterised in that the addition of the component (B) is made in a concentrated or protonated and diluted form to the component (A) or to a pigment-grinding resin or to a pigment paste which contains a part of the component (A).

## Revendications (Revendications pour l'(les) Etat(s) contractant(s) suivant(s): DE, FR, GB, IT)

1. Peintures applicables par électro-immersion déposables à la cathode et pouvant se diluer dans l'eau, caractérisées en ce qu'elles contiennent comme liant sous forme partiellement ou totalement neutralisée
(A) 70-99,5 % en poids, de préférence 80-95 % en poids, d'une résine cationique filmogène et d'une résine additionnelle éventuellement présente en proportion, et
(B) 0,5-30 % en poids, de préférence 5-20 % en poids, d'un composé métallique basique de formule générale 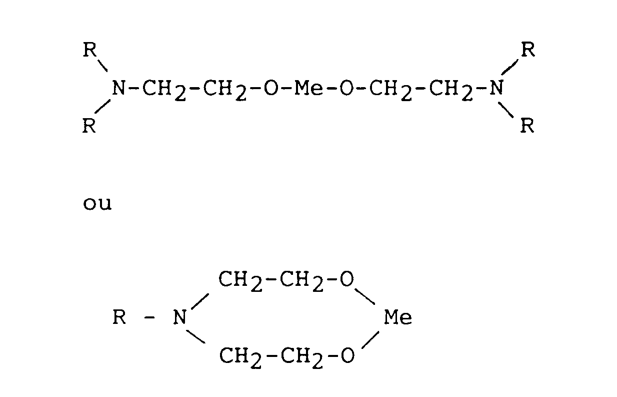 où, dans le constituant (B), R représente un atome d'hydrogène, un reste alkyle ou alcanol aliphatique ou cycloaliphatique éventuellement substitué, ou le reste d'un composé de poids moléculaire élevé, de préférence le reste d'un composé d'oxiranne issu de la réaction avec un groupe amino secondaire, et Me désigne les métaux Mg, Al, Ca, Ti, V, Cr, Mn, Fe, Co, Ni, Cu, Zn, Zr, Sn ou un groupe Me(OR₁)ₙ₋₂, où R₁ est un reste alkyle de 1 à 10 atomes de carbone et n est la valence du métal, à condition que la teneur en métal de la combinaison soit de 0,03 à 3,0, de préférence de 0,1 à 1,0 % en poids par rapport à la teneur en matière solide du liant.

2. Peintures pouvant se diluer dans l'eau selon la revendication 1, caractérisées en ce que, comme constituant (B), sont introduits des produits de réaction de composés qui présentent au moins un groupe β-hydroxyalkylamino avec un oxyde et/ou un acétylacétonate et/ou un alcoolate des métaux indiqués dans la revendication 1.

3. Peintures pouvant se diluer dans l'eau selon les revendications 1 et 2, caractérisées en ce que, comme constituants (B), sont introduits des produits de réaction de β-hydroxyalkylamines, qui peuvent éventuellement porter des substituants azotés, avec les composés métalliques.

4. Peintures pouvant se diluer dans l'eau selon les revendications 1 et 2, caractérisées en ce que, comme constituant (B), sont introduits des produits de réaction de composés β-hydroxyalkylamino de poids moléculaire élevé, de préférence des produits de réaction de composés portant des groupes glycydyle et de mono- et/ou dialcanolamines secondaires, avec les composés métalliques.

5. Peintures pouvant se diluer dans l'eau selon la revendication 4, caractérisées en ce que, comme constituant (B), est introduit un produit de réaction d'un produit d'addition Bisphénol A-résine époxy-diéthanolamine avec les composés métalliques.

6. Peintures pouvant se diluer dans l'eau selon les revendications 1 à 5, caractérisées en ce qu'on ajoute le constituant (B) sous forme concentrée ou protonisée et diluée au constituant (A) ou à une résine de broyage de pigment ou à une pâte de pigment qui contient une partie du constituant (A).

## Revendications (Revendications pour l'(les) Etat(s) contractant(s) suivant(s): ES)

1. Procédé de préparation de peintures applicables par électro-immersion déposables à la cathode et pouvant se diluer dans l'eau, caractérisé en ce qu'on introduit comme liant, sous forme partiellement ou totalement neutralisée, un mélange de
(A) 70-99,5 % en poids, de préférence 80-95 % en poids, d'une résine cationique filmogène et d'une résine additionnelle éventuellement présente en proportion, et
(B) 0,5-30 % en poids, de préférence 5-20 % en poids, d'un composé métallique basique de formule générale 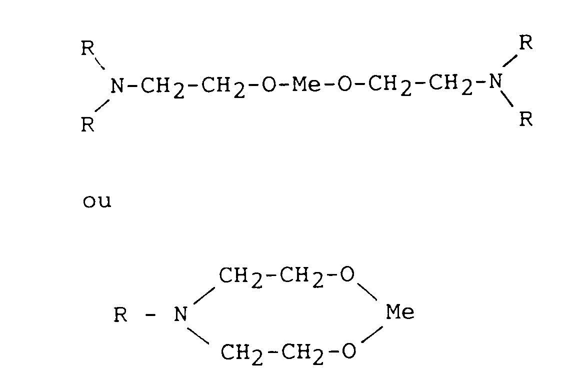 où, dans le constituant (B), R représente un atome d'hydrogène, un reste alkyle ou alcanol aliphatique ou cycloaliphatique éventuellement substitué, ou le reste d'un composé de poids moléculaire élevé, de préférence le reste d'un composé d'oxiranne issu de la réaction avec un groupe amino secondaire, et Me désigne les métaux Mg, Al, Ca, Ti, V, Cr, Mn, Fe, Co, Ni, Cu, Zn, Zr, Sn ou un groupe Me(OR₁)ₙ₋₂, où R₁ est un reste alkyle de 1 à 10 atomes de carbone et n est la valence du métal, à condition que la teneur en métal de la combinaison soit de 0,03 à 3,0, de préférence de 0,1 à 1,0 % en poids par rapport à la teneur en matière solide du liant.

2. Procédé selon la revendication 1, caractérisé en ce qu'on introduit un mélange qui contient, comme constituant (B), des produits de réaction de composés qui présentent au moins un groupe β-hydroxyalkylamino avec un oxyde et/ou un acétylacétonate et/ou un alcoolate des métaux indiqués dans la revendication 1.

3. Procédé selon les revendications 1 et 2, caractérisé en ce qu'on introduit un mélange qui contient, comme constituant (B), des produits de réaction de β-hydroxyalkylamines, qui peuvent éventuellement porter des substituants azotés, avec les composés métalliques.

4. Procédé selon les revendications 1 et 2, caractérisé en ce qu'on introduit un mélange qui contient, comme constituant (B), des produits de réaction de composés β-hydroxyalkylamino de poids moléculaire élevé, de préférence des produits de réaction de composés portant des groupes glycydyle et de mono- et/ou dialcanolamines secondaires, avec les composés métalliques.

5. Procédé selon la revendication 4, caractérisé en ce qu'on introduit un mélange qui contient, comme constituant (B), un produit de réaction d'un produit d'addition Bisphénol A-résine époxy-diéthanolamine avec les composés métalliques.

6. Procédé selon les revendications 1 à 5, caractérisé en ce qu'on ajoute le constituant (B) sous forme concentrée ou protonisée et diluée au constituant (A) ou à une résine de broyage de pigment ou à une pâte de pigment qui contient une partie du constituant (A).
